# EUROPEAN PATENT APPLICATION

(11) **EP 4 589 757 A1**
(43) Date of publication of application: **23.07.2025**
(21) Application number: 24850941.6
(22) Date of filing: 02.08.2024
(51) Int. Cl.: H01M 50/536

(54) **TAB ADHESIVE STRUCTURE, BATTERY MODULE AND BATTERY PACK**

(30) Priority: 08.08.2023 CN 202322114483 U
(71) Applicant: Eve Power Co., Ltd., Jingmen, Hubei 448000 (CN)
(72) Inventor: GONG, Li, Jingmen, Hubei 448000 (CN)
(74) Representative: HGF
(86) International application number: PCT/CN2024/109569
(87) International publication number: WO 2025/031296

(57) **Abstract**

A tab adhesive structure, a battery module, and a battery pack are provided. The tab adhesive structure includes a core package structure, a tab structure, a film, and a connecting piece (300). The core package structure is provided with the tab structure. In a first direction, the connecting piece (300) is located below the tab structure, and the connecting piece (300) is welded to the tab structure. The film is adhered to the core package structure and located on a side away from the connecting piece (300). The tab adhesive structure can reduce the risk of tab breakage, improve the product yield, and save the costs.

## Description

This application claims priority to Chinese Patent Application No. 202322114483.5 filed with the China National Intellectual Property Administration (CNIPA) on Aug. 8, 2023, the disclosure of which is incorporated herein by reference in its entirety.

### TECHNICAL FIELD

This application relates to the field of battery manufacturing technologies, for example, a tab adhesive structure, a battery module, and a battery pack.

### BACKGROUND

At present, in the assembly process of a jelly roll battery, it is usually necessary to weld the positive tab and the negative tab together through a connecting piece, thereby facilitating the conduction of current in the core package.

In the related art, after the process of welding of both the positive tab and the negative tab to the connecting piece is completed, an adhesive bonding process is performed on both sides of the welding structure so that when the core package is folded during the core assembly process, the inner film generates a certain pulling force on the positive tab and the negative tab, thereby easily causing tear or damage to the positive tab and the negative tab, resulting in an increase in the internal resistance of the battery cell, reducing the yield of the battery product, and increasing the costs.

### SUMMARY

According to a first aspect, this application provides a tab adhesive structure.
The tab adhesive structure includes a core package structure, a connecting piece, and a film. The core package structure is provided with a tab structure.
The film is adhered to the core package structure and the tab structure and located on a side away from the connecting piece.

According to a second aspect, this application provides a battery module. The battery module includes a top cover assembly and the preceding tab adhesive structure. The top cover assembly is provided with a pole. The connecting piece is welded to the pole.

According to a third aspect, this application provides a battery pack. The battery pack includes a casing and the preceding battery module. The battery module is disposed in the casing.

This application provides a tab adhesive structure. The tab adhesive structure includes a core package structure, a tab structure, a film, and a connecting piece. In the first direction, the connecting piece is located below the tab structure, and the connecting piece is welded to the tab structure. The film is adhered to the core structure and the tab structure, and the film is located on a side away from the connecting piece. In this application, the film is adhered to only the outer side of the tab structure, and there is no film on the inner side of the tab structure, avoiding the pulling force of the film on the tab structure in a core assembly process, protecting the integrity of the tab structure (the positive tab and the negative tab), avoiding tearing and damage, avoiding the increase of the internal resistance of the cell after core assembly, improving the yield of the battery product, and saving the costs.

The present application further provides a battery module, which has low cost and can reduce the risk of tearing and breakage of the positive tab and the negative tab.

This application also provides a battery pack. The battery pack has low costs, can reduce the risk of tear and breakage of the positive tab and the negative tab, and can improve the product yield.

### BRIEF DESCRIPTION OF DRAWINGS

FIG. 1 is a top view of a tab adhesive structure according to a possible embodiment of this application.
FIG. 2 is a side view of a tab adhesive structure according to a possible embodiment of this application.

### Reference list

100. first core package, 110. positive tab, 200. second core package, 210. negative tab, 300. connecting piece, 400. first film, 500. second film

### DETAILED DESCRIPTION

To make the adopted solutions and achieved technical effects of this application more clear, the solutions of this application are further described hereinafter in conjunction with the drawings and embodiments.

In the description of this application, terms "joined", "connected", and "secured" are to be understood in a broad sense unless otherwise expressly specified and limited. For example, the term "connected" may refer to "securely connected", "detachably connected", or integrated, may refer to "mechanically connected" or "electrically connected", or may refer to "connected directly", "connected indirectly through an intermediary", "connected inside two elements", or an "interaction relation between two elements". For those of ordinary skill in the art, specific meanings of the preceding terms in this application may be understood based on specific situations.

In this application, unless specified or limited otherwise, a structure in which a first feature is "on" or "under" a second feature may include an embodiment in which the first feature and the second feature are in direct contact, and may also include an embodiment in which the first feature and the second feature are not in direct contact but are in contact through another feature there between. Moreover, when the first feature is described as "on", "above", or "over" the second feature, the first feature is right on, above, or over the second feature, the first feature is obliquely on, above, or over the second feature, or the first feature is at a higher level than the second feature. When the first feature is described as "under", "below", or "underneath" the second feature, the first feature is right under, below, or underneath the second feature, the first feature is obliquely under, below, or underneath the second feature, or the first feature is at a lower level than the second feature.

In the description of embodiments, orientations or position relations indicated by terms such as "upper", "lower", "left", and "right" are based on the drawings. These orientations or position relations are intended only to facilitate the description and simplify an operation and not to indicate or imply that a device or element referred to must have such particular orientations or must be configured or operated in such particular orientations. Thus, these orientations or position relations are not to be construed as limiting this application. In addition, the terms "first" and "second" are used to distinguish in the description and have no special meaning.

In the related art, the inner side of the positive tab and the inner side of the negative tab are also each adhered with a film, that is, one end of the film is adhered to the connecting piece, and the other end of the film is adhered to the positive tab or the negative tab. However, in the actual adhering process of the adhesive adhering machine, a certain gap is easily formed between the positive tab and the connecting piece or between the negative tab and the connecting piece so that the film generates a certain pulling force on the positive tab and the negative tab in the process of core assembly, thereby causing tear or damage to the positive tab or the negative tab, affecting the normal use of the battery, and increasing the costs.

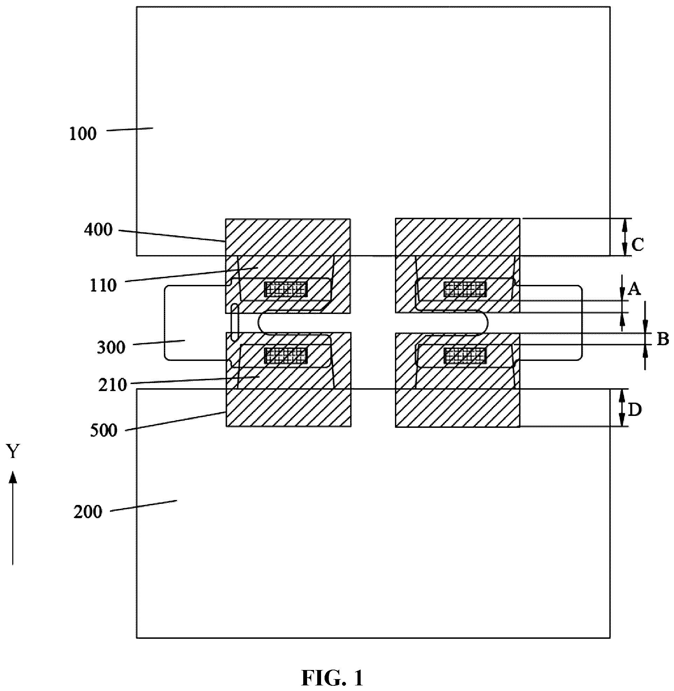

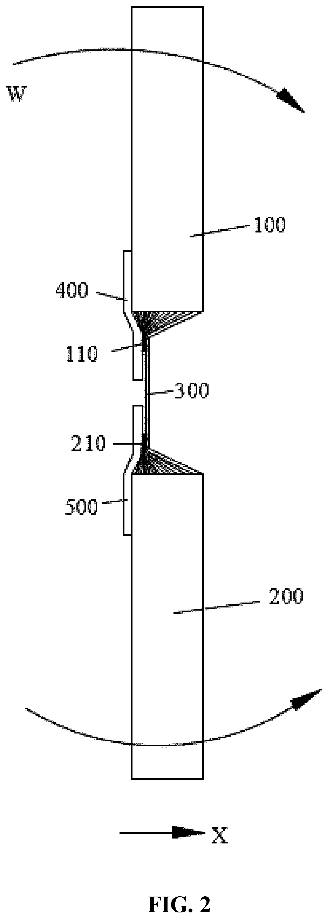

As shown in FIG. 1 and FIG. 2, this embodiment provides a tab adhesive structure. The tab adhesive structure includes a core package structure, a tab structure, a film, and a connecting piece. The core package structure is provided with the tab structure. In a first direction, the connecting piece 300 is located below the tab structure, and the connecting piece 300 is welded to the tab structure. The film is adhered to the core structure and the tab structure. The film is located on a side away from the connecting piece 300. The first direction in this embodiment is the X-axis direction in FIG. 2.

For example, the core package structure in this embodiment includes a first core package 100 and a second core package 200. The tab structure includes a positive tab 110 and a negative tab 210. The films include a first film 400 and a second film 500. One of the positive tab 110 or the negative tab 210 is disposed on the first core package 100. The other of the negative tab 210 or the positive tab 110 is disposed on the second core package 200. In the first direction (that is, the X-axis direction in FIG. 2), the connecting piece 300 is located below the positive tab 110 and the negative tab 210, and the connecting piece 300 is welded to both the positive tab 110 and the negative tab 210. The film includes a first film 400 and a second film 500, the first film 400 is adhered to the first core package 100 and the positive tab 110, and the second film 500 is adhered to the second core package 200 and the negative tab 210; or the first film 400 is adhered to the first core package 100 and the negative tab 210, and the second film 500 is adhered to the second core package 200 and the positive tab 110; and in the first direction, the film is located on a side away from the connecting sheet 300.

Based on the preceding design, in this embodiment, there may be multiple first core packages 100 and multiple second core packages 200, and the first core packages 100 and the second core packages 200 are in a one-to-one correspondence. For example, the number of first core packages 100 and the number of second core packages 200 are each set to 1, 2, or 3. The first core package 100 is provided with a positive tab 110 or a negative tab 210. Similarly, the second core package 200 is provided with a positive tab 110 or a negative tab 210. In this embodiment, the first core package 100 is provided with a positive tab 110, and the second core package 200 is provided with a negative tab 210. The first film 400 is adhered to the first core package 100 and the positive tab 110. The second film 500 is adhered to the second core package 200 and the negative tab 210. The first film 400 and the second film 500 are both adhered to the same side. In this embodiment, the films are adhered to only the outer side of the positive tab 110 and the outer side of the negative tab 210, and there is no film on the inner side of the positive tab 110 and the inner side of the negative tab 210, avoiding the pulling force of the films on the positive tab 110 and the negative tab 210 during core assembly, protecting the integrity of the positive tab 110 and the negative tab 210, avoiding tearing and damage, avoiding the increase of the internal resistance of the cell after core assembly, improving the yield of the battery product, and saving the costs. It is to be noted that the core-assembly direction of the first core package 100 and the second core package 200 is the direction W in FIG. 2. It is to be noted that the outer side of the positive tab 110 and the outer side of the negative tab 210 refer to the outer side of the positive tab 110 and the outer side of the negative tab 210 facing away from the connecting piece 300 in the X direction in FIG. 2. The inner side of the positive tab 110 and the inner side of the negative tab 210 refer to the side of the positive tab 110 and the side of the negative tab 210 facing the connecting piece 300 in the X direction in FIG. 2.

As shown in FIG. 1, in this embodiment, the first core package 100 is provided with a positive tab 110, and the second core package 200 is provided with a negative tab 210; and a first end of the first film 400 protruding from the positive tab 110 is a first preset distance A, a first end of the second film 500 protruding from the negative tab 210 is a second preset distance B, a second end of the first film 400 protruding from the positive tab 110 is a third preset distance C, and a second end of the second film 500 protruding from the negative tab 210 is a fourth preset distance D. Thus, both the first film 400 and the second film 500 can completely cover the positive tab 110 and the negative tab 210, thereby improving the insulation protection effect on the positive tab 110 and the negative tab 210. Moreover, the first film 400 and the second film 500 can fix the metal chips generated during the welding process to a certain extent, thereby avoiding the risk of increasing the internal resistance of the battery cell caused by the metal chips falling into the core packages.

In an example, the first preset distance A and the second preset distance B are the same and are each set to 5 mm to 10 mm. For example, the first preset distance A and the second preset distance B are each set to 5 mm, 6 mm, 7 mm, 8 mm, 9 mm, or 10 mm. The third preset distance C and the fourth preset distance D are the same and are each set to 10 mm to 20 mm. For example, the third preset distance C and the fourth preset distance D are each set to 10 mm, 15 mm, or 20 mm.

For example, in this embodiment, the width of the first film 400 is greater than the width of the positive tab 110, and the width of the second film 500 is greater than the width of the negative tab 210. As shown in FIG. 1, the Y direction is the width direction of the first film 400, the positive tab 100, the second film 500, and the negative tab 210.

For example, in this embodiment, the size of the first film 400 and the size of the second film 500 may be each set to 43 mm*45 mm.

For example, in this embodiment, the connecting piece 300 is ultrasonically welded to both the positive tab 110 and the negative tab 210, thereby improving the stability and reliability of welding of the connecting piece 300 to the positive tab 110 and the negative tab 210. Of course, other welding methods may also be used, such as butterfly welding.

For example, the first film 400 and the second film 500 are each a polyimide (PI) adhesive. The insulation, high temperature resistance, voltage resistance, and radiation resistance of the first film 400 and the second film 500 are improved.

An embodiment provides a battery module. The battery module includes a top cover assembly and the preceding tab adhesive structure. The top cover assembly is provided with a pole. The connecting piece 300 is welded to the pole. In an example, the connecting piece 300 is welded to the pole by laser welding. The battery module has low costs and can reduce the risk of tear and breakage of the positive tab 110 and the negative tab 210.

An embodiment provides a battery pack. The battery pack includes a casing and the preceding battery module. The battery module is disposed in the casing. The battery pack has low costs, can reduce the risk of tear and breakage of the positive tab 110 and the negative tab 210, and can improve the product yield.

It is to be noted that, in the description of the specification, the description with reference to the terms "some embodiments", "other embodiments" and the like means that specific features, structures, materials or characteristics described in conjunction with the embodiments or examples are included in at least one embodiment or example of this application. In the Specification, the illustrative description of the preceding terms does not necessarily refer to the same embodiments or examples. Moreover, the described specific features, structures, materials, or characteristics may be combined appropriately in any one or more embodiments or examples.

## Claims

1. A tab adhesive structure, comprising:
a core package structure provided with a tab structure;
a connecting piece (300), wherein in a first direction, the connecting piece (300) is located below the tab structure, and the connecting piece (300) is welded to the tab structure; and
a film adhered to the core package structure and the tab structure and located on a side away from the connecting piece (300).

2. The tab adhesive structure of claim 1, wherein the core package structure comprises a first core package (100) and a second core package (200), the tab structure comprises a positive tab (110) and a negative tab (210), and the film comprises a first film (400) and a second film (500); and
the first core package (100) is provided with the positive tab (110), the second core package (200) is provided with the negative tab (210), the first film (400) is adhered to the first core package (100) and the positive tab (110), and the second film (500) is adhered to the second core package (200) and the negative tab (210); or
the first core package (100) is provided with the negative tab (210), the second core package (200) is provided with the positive tab (110), the first film (400) is adhered to the first core package (100) and the negative tab (210), and the second film (500) is adhered to the second core package (200) and the positive tab (110).

3. The tab adhesive structure of claim 2, wherein the first core package (100) is provided with the positive tab (110), and the second core package (200) is provided with the negative tab (210); and a first end of the first film (400) protruding from the positive tab (110) is a first preset distance, and a first end of the second film (500) protruding from the negative tab (210) is a second preset distance.

4. The tab adhesive structure of claim 3, wherein the first preset distance and the second preset distance are the same, and the first preset distance and the second preset distance are each set to 5 mm to 10 mm.

5. The tab adhesive structure of claim 3, wherein a second end of the first film (400) protruding from the positive tab (110) is a third preset distance, and a second end of the second film (500) protruding from the negative tab (210) is a fourth preset distance.

6. The tab adhesive structure of claim 5, wherein the third preset distance and the fourth preset distance are the same, and the third preset distance and the fourth preset distance are each set to 10 mm to 20 mm.

7. The tab adhesive structure of claim 3, wherein a width of the first film (400) is greater than a width of the positive tab (110), and a width of the second film (500) is greater than a width of the negative tab (210).

8. The tab adhesive structure of any one of claims 2 to 7, wherein the first film (400) and the second film (500) are each a polyimide adhesive.

9. A battery module, comprising a top cover assembly and the tab adhesive structure of any one of claim 1 to 8, wherein the top cover assembly is provided with a pole, and the connecting piece (300) is welded to the pole.

10. A battery pack, comprising a casing and the battery module of claim 9, wherein the battery module is disposed in the casing.
